**Europäisches Patentamt**

**European Patent Office**

**Office européen des brevets**

(19)

(11) Publication number: **0 214 105**
**B1**

(12) # EUROPEAN PATENT SPECIFICATION

(45) Date of publication of the patent specification:
**23.11.89**

(51) Int. Cl.⁴: **A61C 17/04**

(21) Application number: **86830173.0**

(22) Date of filing: **19.06.86**

(54) Improvements in a console carrying the tubes of oral suction equipment used in dentistry.

(30) Priority: **31.07.85 IT 4007885**

(43) Date of publication of application:
**11.03.87 Bulletin 87/11**

(45) Publication of the grant of the patent:
**23.11.89 Bulletin 89/47**

(84) Designated Contracting States:
**CH DE FR GB LI SE**

(56) References cited:
**EP-A- 0 040 181**

(73) Proprietor: **Officine Augusto CATTANI & C. S.p.A., Via Mantova, 90/A, I-43100 Parma(IT)**

(72) Inventor: **Cattani, Augusto, Via Zanardi, 12, I-43100 Parma(IT)**

(74) Representative: **Lanzoni, Luciano, c/o BUGNION S.p.A. Viale Trento Trieste, 25, I-41100 Modena(IT)**

ACTORUM AG

## Description

The invention described herein relates to improvements in a console carrying the tubes of oral suction equipment used in dentistry.

Suction equipment used in dentistry is provided with tubes that are employed for the purpose of extracting liquids, generally blood, saliva, rinsing water, and other foreign matter, that collect in the mouth of a patient during treatment.

When not in use, the tubes are located in housings, or slots, that exhibit a substantially forked profile and are provided in number corresponding to the number of suction tubes fitted. Such slots are incorporated into a console to which each of the tubes is attached by way of a respective flexible suction hose; one further hose connects the console with a conventional pump unit that generates the negative pressure required in order to create suction through the tubes and their relative hoses.

Consoles of the type in question comprise means for stopping suction through a single tube whenever the tube is replaced in its slot, means for shutting off the pump when all of the tubes are replaced in their slots, and means for initial filtering of the spittle extracted from the patient's mouth by way of the tube, or tubes.

The means referred to in general terms above are described and illustrated in detail in European Patent 0 040 181, property of the same applicant.

In such a console, which consists essentially of a box-like shell provided with an internal collection chamber that connects with the suction pump directly and is interconnected with the suction tubes by way of diaphragm valves, the filtering means consist of a filter drawer located inside the collection chamber, whilst means for stopping suction through a tube consist of a pneumatic valve the diaphragm obturator of which is controlled to open or close the valve passage by way of a shut-off valve. Means for shutting off the suction pump consist of microswitches that are wired to cut off electrical power supply to the motor driving the pump whenever all of the tubes are replaced on the console.

The patent console in question is beset by certain drawbacks, as indeed are other conventional types of console. First and foremost, the diaphragms that act as obturators in the pneumatic valves are in contact with foam, blood and other foreign matter carried in the spittle extracted from the patient's mouth, the result of which is that they become encrusted, and optimum operation is impaired. Similar encrustation can occur around the seats of the diaphragm valves, likewise resulting in poor operation of the console. Second, in situations where one has a tube or tubes replaced in the slot/s, with the suction pump still running due to one or more remaining tube/s being in current use, the respective shut-off valves controlling operation of the diaphragms admit air from the surrounding environment through their rear ports, and albeit such infiltration is limited and does not represent the cause of any great drawback in terms of loss of negative pressure within the console, it gives rise nonetheless to an annoying hiss produced by the passage of air through the rear port of the shut-off valve.

Accordingly, the object of the invention is that of overcoming the drawbacks mentioned above, providing a console in which there are no problems traceable to encrustation or deposits forming on the diaphragm valves, and from which noise caused by infiltration of air into a negative pressure environment is eliminated.

A further object of the invention is that of providing a console that requires the minimum of cleaning and servicing operations carried out on its component parts.

The stated objects, and others besides, are realized with a console as described and as claimed herein. As in the case of the console described and illustrated in EP 0 040 181, the improved console is of a type having one or more slots accommodating the oral suction tube or tubes, comprising: a box-like shell furnished with an internal collection chamber that connects directly with a suction pump and is interconnected with each of the suction tubes by way of conventional diaphragm-type pneumatic valves that connect in turn with relative ducts incorporated into the box-like shell at their respective one ends and connected with said suction tubes at their repsective other ends; pneumatic actuator means that open and close the diaphragm valves and comprising a three way pneumatic control valve the spol of which is shifted by a respective suction tube; and means for filtration of fluids drawn in through the suction tubes; and is characterized in that the spool of the pneumatic control valve is shifted such that, when the tube is replaced in its slot, the top section of the diaphragm valve is vented to the atmosphere and the passage between the top section and the negatively pressurized bottom section of the valve is blocked, whereas when the tube is removed from its slot, the passage between the top and the bottom section of the valve is opened and connection between the top section of the valve and atmosphere is inhibited, and in that filtration means comprise a filter located in the duct relative to each tube at a point upstream of the diaphragm valve.

The invention will now be described in detail, by way of example, with the aid of the accompanying drawings, in which:

fig 1 is a view of the console from above, in which certain parts are omitted better to reveal others,

fig 2 is the section through II–II in fig 1;

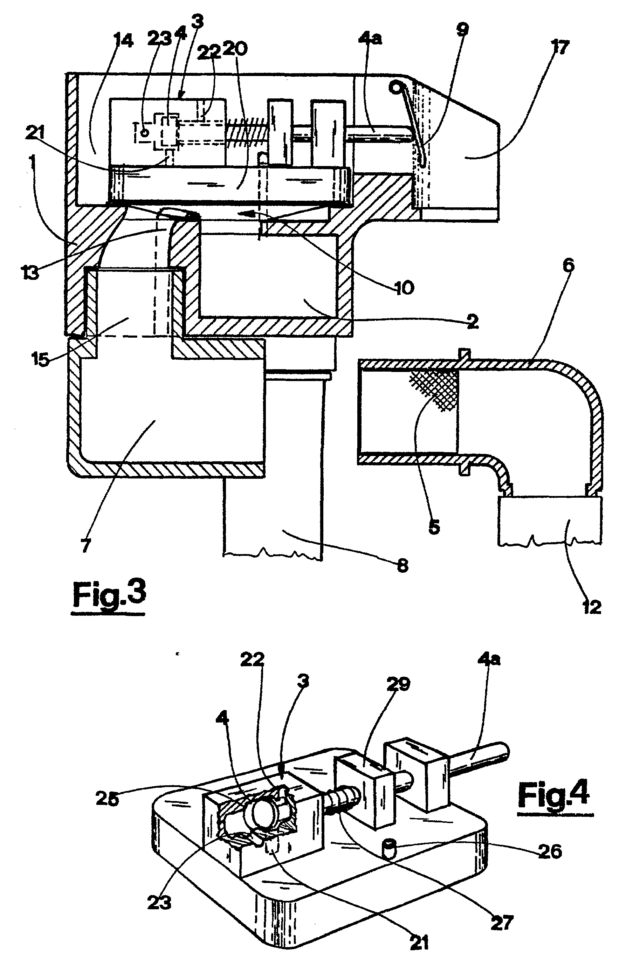

fig 3 is the section through III–III in fig 1, in which certain parts are not included in the cut;

fig 4 is the perspective of a detail of the improved console, with certain parts cut away better to reveal others.

The console illustrated in the accompanying drawings and described in the following text is of a type designed to carry two suction tubes; it will be clear enough, however, that the subject matter claimed is applicable to consoles that incorporate a number of slots other than two, hence able to carry a number of tubes other than two.

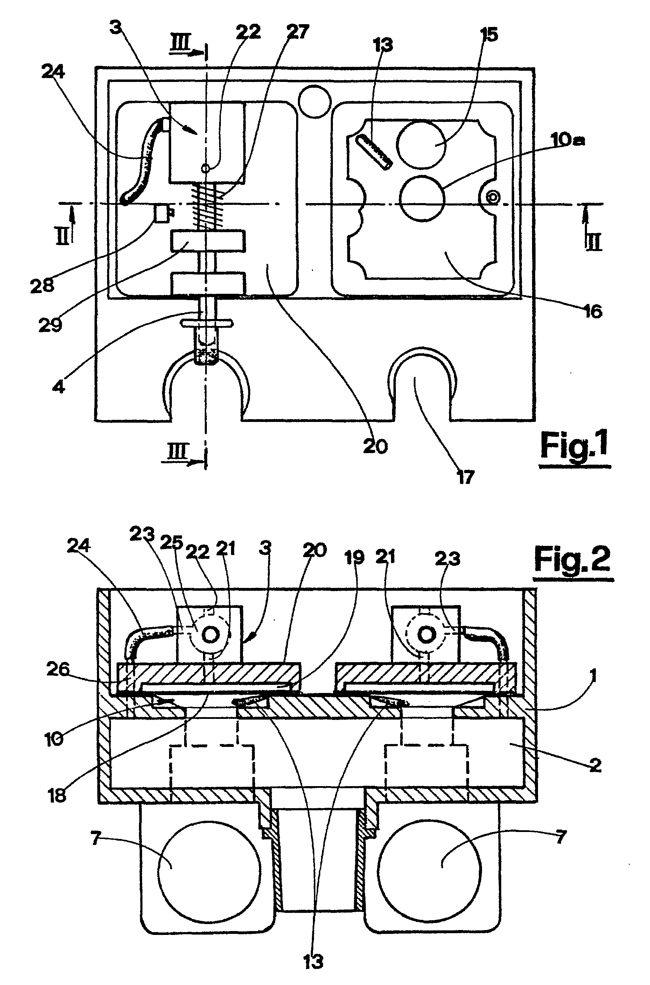

The console comprises a box-like shell 1 of substantially parallelepiped shape, and is provided with an internal collection chamber 2 of substantially rectangular cross section, disposed with its longitudinal axis transverse to the console as seen in fig 2. The collection chamber 2 connects with a suction pump (not illustrated) by way of a first hose 8. 14 denotes a compartment situated at the uppermost part of the shell 1 and normally enclosed by a cover (not shown in the drawings), the bottom of which exhibits recesses 16 corresponding in number to the number of suction tubes fitted; 10a denotes the seat of a diaphragm-type pneumatic valve 10, located at the centre of each recess 16, and 15 denotes a duct incorporated into the shell 1 of the console, which emerges into the bottom of each recess 16 on the one hand, and on the other, connects with a relative suction tube by way of a second hose 12.

The bottom end of each duct 15 widens out to create a socket 7 for accommodation of a fitting 6, one end of which houses a filter 5; the other end of this same fitting 6 is connected to the hose 12 of the suction tube. Thus, each of the single suction tubes is provided with filtering means located internally of the relative duct and upstream of the respective diaphragm valve 10.

18 denotes the diaphragm obturator of each pneumatic valve, positioned over the relative recess 16.

20 denotes a lid positioned above the diaphragm 18, and 19 denotes a chamber created between the lid and the diaphragm.

The lid 20 of each valve carries a pneumatic control valve 3, the spool 4 of which has a shank 4a that extends into the slot 17 accommodating the relative suction tube. Internally of the control valve 3, one has a chamber 25 which connects permanently, by way of a first orifice 21, with the chamber 19 created between the lid 20 and the diaphragm 18, and is provided at the one end with a second orifice 22, connected to atmosphere, and at the other with a third orifice 23 that connects by way of a small bore hose 24 with a hole 26 that passes through the bulkhead enclosing the compartment 14 at bottom and emerges into the collection chamber 2.

With the suction tube removed from its slot 17, a spring 27 biases the shank 4a toward the slot such that the spool 4 blocks the passage into the control valve chamber 25 from the second orifice 22, while opening up the passage from the third orifice 23 into the chamber 25; conversely, when the suction tube is replaced in the slot, the shank 4a will be pushed against the spring, causing the spool 4 to shift internally of the chamber 25 and block passage there into from the third orifice 23, while opening up the passage into the chamber 25 which is afforded by the second orifice 22.

With the suction tube removed from its slot, in such an arrangement, the control valve chamber 25 is connected with the chamber 19 underneath by way of the first orifice 21, and thus connects ultimately with the collection chamber 2, i.e. with negative pressure, whereas no connection is allowed between the chamber 25 and the atmosphere. With the suction tube replaced in its slot, on the other hand, the control valve chamber 25 is isolated from the chamber 19 beneath, hence from the collection chamber 2 and from negative pressure, being vented instead to the atmosphere.

In effect, whenever the suction tube is removed from its slot, the top section of the diaphragm valve 10 is negatively pressurized to the same degree as that of the collection chamber 2, such that the diaphragm 18 will be raised, opening the passage from the duct 15 into the collector 2, whereas replacement of the suction tube in its slot produces a return to atmospheric pressure in the top section of the valve 10, such that the diaphragm 18 will be lowered, blocking the passage between the duct 15 and the collection chamber 2. The same effect has been produced hitherto with conventional consoles, though in an improved embodiment there is no infiltration of air through the small bore hose 24 when the suction tube is replaced in its slot, since no connection to negative pressure is allowed by that route.

Smooth shift of the spool 4 at each slot is ensured by the provision of a second class lever 9, located forward of the spool shank 4a, that is operated by positioning the suction tube in the slot. More exactly, the shank 4a makes contact with the lever 9 at a point nearer to the fulcrum than to the load; thus one achieves mechanical advantage, and indeed a considerable reduction in effort required to shift the spool 4 when the control valve 3 is operated.

29 denotes a plate, associated with the shank 4a of each spool 4 and set back from the relative slot 17, inside the console; the plate 29 shifts as one with the spool 4, and engages an electrical switch 28 each time the suction tube is replaced in its slot. As is the case in conventional consoles, the engaged condition of the switches 28 of all the suction tubes, occurring together, logically inhibits electrical power supply to the motor driving the suction pump, thus causing operation of the console to cease altogether.

The improved console comprises one flushing tube 13 to each diaphragm valve 10, one end of which is immersed in a receptacle of washing liquid (not shown in the drawings); the other end of the single tube 13 is located internally of the console and emerges into the bottom section of the valve 10, immediately upstream of the valve seat. To be exact, this end of the flushing tube 13 rests on the bottom surface of the recess 16, a short distance from the valve seat.

The operation of an improved console according to the invention will now be described, departing from the condition in which all suction tubes are located in their respective slots, engaging the respective switches 28 such that the suction pump is at standstill.

When a suction tube is lifted from its slot 17, the suction pump is set in motion, and negative pressure conditions are created in the collection chamber 2. The pneumatic control valve 3 relative to the single suction tube proceeds to open the diaphragm valve 10 such that the connection is made between the duct 15 and the collection chamber 2, thereby connecting the suction tube with negative pressure and enabling extraction of liquids from the mouth of the patient. At the same time, negative pressure is also created through the end of the flushing tube 13 nearest the seat of the diaphragm valve 10; washing liquid is thus drawn up and flushed around the bottom of the recess 16 and the valve seat, thereby ensuring clean operating conditions.

Spittle drawn in by the suction tube passes into the hose fitting 6 and through the filter 5, so that the liquid which rises through the duct 15 and hits the diaphragm 18, before precipitating into the collection chamber 2 and discharging ultimately through the first hose 8, will be freed of the greater part of foreign matter and foam; accordingly, one is able to avoid accumulation of deposits on the diaphragm 18. Soluble substances liable to encrust, such as blood, are flushed away continuously by liquid drawn into the valve through the relative tube 13, so that both the diaphragm 18 and the seat of the valve 10 can be kept constantly clean.

A suction tube not removed from its slot in the manner described above will remain inactive, since its control valve 3 continues to keep the relative diaphragm valve 10 in the closed configuration. At all events, no air can enter the console from outside since no negative pressure environment is vented to atmosphere, and the annoying sound produced by such infiltration is duly avoided.

When a suction tube in current use is replaced in its slot, the inrush of air to the top chamber 19 of the valve is such as to restore atmospheric pressure almost instantaneously; thus, apart from an initial, and extremely short venting of the negative pressure environment to atmosphere (a markedly small environment, it will be noted), one has no further entry of air into the console.

## Claims

1. Improvements in a console carrying the tubes of oral suction equipment used in dentistry, of a type having one or more slots accommodating the oral suction tube or tubes, and comprising: a box-like shell (1) furnished with an internal collection chamber (2) that connects directly with a suction pump and is interconnected with each of the suction tubes by way of conventional diaphragm-type pneumatic valves (18, 10) that connect in turn with respective ducts (15) incorporated into the box-like shell (1) at their respective one ends and connected with said suction tubes at their respective other ends; pneumatic actuator means that open and close the diaphragm valves and comprise a three way pneumatic control valve (3) the spool (4) of which is shifted by a respective suction tube; and means for filtration of fluids drawn in through the suction tubes, characterized
   – in that the spool (4) of the pneumatic control valve (3) is shifted such that, when the tube is replaced in its slot, the top section of the diaphragm valve (10) is vented to the atmosphere and the passage between the top section and the negatively pressurized bottom section of the valve is blocked, whereas when the tube is removed from its slot, the passage between the top and the bottom section of the valve is opened and connection between the top section of the valve and atmosphere is inhibited; and
   – in that the filtration means comprise a filter (5) located in the duct (15) relative to each tube at a point upstream of the diaphragm valve.

2) Console as in claim 1, wherein the filter (5) serving each suction tube is accommodated within a respective fitting (6) one end of which is connected to the hose (12) extending from the suction tube, and the remaining end of which is coupled insertably and in fluid-tight association with a socket offered by the duct (15).

3) Console as in claim 1, wherein the slot (17) carrying each suction tube accommodates a second class lever (9) that is operated by the suction tube and impinges on the spool of the pneumatic control valve by way of a shank (4a) extending from the spool and emerging into the slot.

4) Console as in claim 1, wherein the diaphragm valve of each suction tube is served by a flushing tube (13) one end of which is immersed in a receptacle of washing liquid, whereas the remaining end is located inside the console at a point within the bottom section of the diaphragm valve, immediately upstream of the valve seat.

5) Console as in claim 1, wherein the pneumatic control valve comprises a chamber (25) connected by way of a first orifice (21) with the top section of the diaphragm valve, provided at the one end with a second orifice (22), connected to atmosphere, and at the other end with a third orifice (23) that connects with the bottom section of the diaphragm valve, and wherein shift of the pneumatic control valve spool within the chamber, occasioned by removal of the suction tube from its slot, blocks the passage between the first orifice and the second orifice while connecting the first orifice and the third orifice, whereas shift occasioned by replacement of the suction tube in its slot connects the first orifice and the second orifice while blocking the passage between the first orifice and the third orifice.

## Patentansprüche

1. Verbesserungen an einer Konsole für die Schläuche einer Absaugeinrichtung für zahnärztliche Zwecke vom Typ mit einem oder mehreren Sitzen zur Aufnahme der Röhre oder der Röhren zum Absaugen aus dem Mund und wie folgt enthaltend: Eine kastenförmige Schale (1), versehen mit einer internen Sammelkammer (2), welche direkt mit einer Absaugpumpe verbunden ist und im Verbundbetrieb mit einem jeden der Absaugröhren steht, und zwar über herkömmliche pneumatische Membranventile (18, 10), die jeweils mit ihrem einen Ende mit den entsprechenden, in die kastenförmige Schale (1) eingearbeiteten Leitungen (15) verbunden sind und mit dem anderen Ende an die genannten Absaugröhren angeschlossen sind; pneumatische Antriebsmittel, welche die Membranventile öffnen und schließen und ein pneumatisches Dreiwege-Steuerventil (3) enthalten, dessen Steuerschieber (4) von einer entsprechenden Absaugröhre verschoben wird; sowie Mittel zum Filtrieren der durch die Absaugschläuche abgesaugten Flüssigkeiten, dadurch gekennzeichnet,

    – daß der Steuerschieber (4) des pneumatischen Steuerventils (3) so verschoben wird, daß, wenn sich die Röhre in ihrem Sitz befindet, der obere Teil des Membranventils (10) zum Außenbereich hin offen und der Durchlaß zwischen dem oberen Teil und dem unter Unterdruck stehenden unteren Teil des Ventils blockiert ist, so daß, wenn die Röhre aus ihrem Sitz genommen wird, der Durchlaß zwischen dem oberen und dem unteren Teil des Ventils geöffnet ist und die Verbindung zwischen dem oberen Teil des Ventils und dem Außenbereich verhindert wird, und

    – daß die Filtermittel einen Filter (5) enthalten, der in der sich auf jede Röhre beziehenden Leitung (15) angeordnet ist, und zwar an einem Punkt vor dem Membranventil.

2. Konsole nach Patentanspruch 1, dadurch gekennzeichnet, daß der für jede Absaugröhre vorgesehene Filter (5) in einem entsprechenden Verbindungsstück (6) gelagert ist, dessen eines Ende an den Schlauch (12) angeschlossen ist, der sich von der Absaugröhre aus erstreckt, und dessen anderes Ende in dicht abschließender Verbindung in einen Sitz einsetzbar ist, der von der Leitung (15) dargeboten wird.

3. Konsole nach Patentanspruch 1, dadurch gekennzeichnet, daß der Sitz (17) für eine jede Absaugröhre einen zweitrangigen Hebel (9) aufweist, der durch die Absaugröhre ausgelöst wird und auf den Steuerschieber des pneumatischen Steuerventils wirkt, und zwar über einen Schaft (4a), der sich von dem Steuerschieber aus erstreckt und in den Sitz hineinragt.

4. Konsole nach Patentanspruch 1, dadurch gekennzeichnet, daß das Membranventil einer jeden Absaugröhre von einem Spülschlauch (13) bedient wird, dessen eines Ende in einen Aufnahmebehälter für eine Spülflüssigkeit getaucht ist, während das verbleibende Ende im Inneren der Konsole angeordnet ist, und zwar an einem Punkt innerhalb des unteren Abschnittes des Membranventils und unmittelbar über dem Sitz des Ventils.

5. Konsole nach Patentanspruch 1, dadurch gekennzeichnet, daß das pneumatische Steuerventil eine Kammer (25) enthält, die über eine erste Öffnung (21) mit dem oberen Abschnitt des Membranventils verbunden und an dem einen Ende mit einer zweiten Öffnung (22) versehen ist, die mit dem Außenbereich in Verbindung steht, sowie an dem anderen Ende mit einer dritten Öffnung (23), die mit dem unteren Abschnitt des Membranventils verbunden ist, wobei das Verschieben des Steuerschiebers des pneumatischen Steuerventils innerhalb der Kammer, das durch das Herausnehmen der Absaugröhre aus ihrem Sitz hervorgerufen wird, den Durchlaß zwischen der ersten Öffnung und der zweiten Öffnung blockiert, während die erste Öffnung und die dritte Öffnung miteinander verbunden sind, und wobei die Verschiebung, hervorgerufen durch das Wiedereinsetzen der Absaugröhre in ihren Sitz, die erste Öffnung mit der zweiten Öffnung verbindet, während der Durchlaß zwischen der ersten Öffnung und der dritten Öffnung blockiert ist.

## Revendications

1. Améliorations apportées à une console portant les tubes d'aspiration buccale utilisée en dentisterie, du type ayant une ou plusieurs rainures destinées à loger le tube ou les tubes d'aspiration buccale et comprenant: un corps en forme de boîte (1) pourvu d'un collecteur intérieur (2) qui est relié directement à une pompe d'aspiration et communiquant avec chacun des tubes d'aspiration à travers des soupapes pneumatiques conventionnelles de type à diaphragme (18, 10) qui à leur tour sont reliées, par l'une de leurs extrémités, à des conduits respectifs (15) incorporés dans le corps en forme de boîte (1) et, par leurs extrémités opposées, auxdits tubes d'aspiration; des moyens d'actionnement pneumatiques qui ouvrent et ferment les soupapes à diaphragme et comportent une soupape de contrôle pneumatique (3) à trois voies dont le tiroir (4) est déplacé par un respectif tube d'aspiration; et des moyens pour le filtrage des fluides aspirés par les tubes d'aspiration, caractérisée:

    – en ce que le tiroir (4) de la soupape pneumatique de contrôle (3) est déplacé de telle sorte que quand le tube est remis en place dans sa rainure, la partie supérieure de la soupape à diaphragme (10) est ouverte à l'atmosphère et le passage entre la partie supérieure et la partie inférieure en pression négative de la soupape est bloqué, tandis que quand le tube est enlevé de sa rainure, le passage entre les parties supérieure et inférieure de la soupape est ouvert et il n'y a pas de liaison entre la partie supérieure de la soupape et l'atmosphère; et

    – en ce que les moyens de filtrage comportent un filtre (5) situé dans le conduit (15) relativement à chaque tube à un endroit qui se trouve en amont de la soupape à diaphragme.

2. Console selon la revendication 1, caractérisée en ce que le filtre (5) servant chaque tube d'aspiration est logé à l'intérieur d'une respective tubulure (6) dont une extrémité est reliée au tuyau flexible (12) s'étendant du tube d'aspiration, et l'autre extrémité est introduite de manière étanche dans une cavité présentée par le conduit (15).

3. Console selon la revendication 1, caractérisée en ce que la rainure (17) portant chaque tube d'aspiration loge un levier (9) du second genre qui est actionné par le tube d'aspiration et vient heurter le tiroir de la soupape pneumatique de contrôle par une queue (4a) s'étendant du tiroir et sortant dans la rainure.

4. Console selon la revendication 1, caractérisée en ce que la soupape à diaphragme de chaque tube d'aspiration est servie par un tube de lavage (13) dont une extrémité est plongée dans un réservoir de liquide de lavage tandis que l'autre extrémité se trouve à l'intérieur de la console à un endroit situé dans la partie inférieure de la soupape à diaphragme, immédiatement en amont du siège de la soupape.

5. Console selon la revendication 1, caractérisée en ce que la soupape pneumatique de contrôle comporte une chambre (25) reliée par un premier orifice (21) à la partie supérieure de la soupape à diaphragme, pourvue à l'une de ses extrémités d'un deuxième orifice (22) relié à l'atmosphère et à son autre extrémité d'un troisième orifice (23) la reliant à la partie inférieure de la soupape à diaphragme, et en ce que le déplacement du tiroir de la soupape pneumatique de contrôle à l'intérieur de la chambre, résultant de l'enlèvement du tube d'aspiration de sa rainure, bloque le passage entre le premier orifice et le deuxième orifice, alors qu'il relie le premier orifice au troisième orifice, tandis que le déplacement résultant de la remise en place du tube d'aspiration dans sa rainure cause la liaison entre le premier orifice et le deuxième orifice et en même temps le blocage du passage entre le premier orifice et le troisième orifice.

**Fig.1**

**Fig.2**

**Fig.3**

**Fig.4**